(19) Europäisches Patentamt
European Patent Office
Office européen des brevets

(11) EP 2 128 407 B1

(12) **EUROPEAN PATENT SPECIFICATION**

(45) Date of publication and mention of the grant of the patent:
**22.02.2012 Bulletin 2012/08**

(21) Application number: **08738657.9**

(22) Date of filing: **13.03.2008**

(51) Int Cl.:
***F02M 25/07*** *(2006.01)* ***F02D 21/08*** *(2006.01)*
***F02D 41/00*** *(2006.01)* ***F02D 9/04*** *(2006.01)*

(86) International application number:
**PCT/JP2008/054669**

(87) International publication number:
**WO 2008/120553 (09.10.2008 Gazette 2008/41)**

(54) **EGR CONTROLLER FOR INTERNAL COMBUSTION ENGINE**

AGR-STEUERUNGSGERÄT FÜR EINEN VERBRENNUNGSMOTOR

CONTRÔLEUR D'EGR DESTINÉ À UN MOTEUR À COMBUSTION INTERNE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.03.2007 JP 2007088707**

(43) Date of publication of application:
**02.12.2009 Bulletin 2009/49**

(73) Proprietor: **Honda Motor Co., Ltd.**
**Minato-ku**
**Tokyo 107-8556 (JP)**

(72) Inventors:
- **UENO, Masaki**
**Wako-shi**
**Saitama 3510193 (JP)**
- **NAKAJIMA, Koichi**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**EP-A1- 1 340 904**
**EP-A1- 1 676 995**
**EP-A2- 1 808 591**
**DE-A1- 3 237 337**
**DE-A1-102006 038 863**
**JP-A- 02 011 858**
**JP-A- 08 170 540**
**JP-A- 10 266 866**
**JP-A- 11 062 662**
**JP-A- 2000 064 883**
**JP-A- 2004 150 319**
**JP-A- 2005 055 952**
**JP-A- 2005 127 247**
**JP-A- 2006 336 547**
**JP-A- 2006 336 547**
**US-A- 6 138 649**
**US-A1- 2001 029 935**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 128 407 B1

## Description

Technical Field

The present invention relates to an EGR controller for an internal combustion engine.

Background Art

There has been proposed an EGR device (high pressure EGR device) which returns part of exhaust gas to an intake side in an internal combustion engine and then performs combustion with the returned exhaust gas (EGR gas) to lower a combustion temperature, thereby reducing the amount of generated NOx (nitride oxide). As in Japanese Patent Application Laid-Open No. 2005-127247 and Japanese Patent Application Laid-Open No. 2004-150319, providing a low pressure EGR device in combination with the high pressure EGR device has been proposed. This technique can lower the temperature of the exhaust gas returned to the intake side. Therefore, the combustion temperature can be lowered to reduce the amount of generated NOx.

Japanese Patent Application Laid-Open No. 2002-21625 describes that, in such a low pressure EGR device, an EGR valve for controlling the amount of EGR gas passing through an EGR passage is provided in the EGR passage. The EGR passage connects an exhaust manifold downstream of a turbine of a supercharger and an intake manifold upstream of a compressor is provided in the EGR passage. A back pressure valve is provided downstream from a branched point of the EGR passage in the exhaust manifold. The back pressure valve increases and decreases a pressure at the branched point to adjust an EGR rate.

DE 10 2006 038 863 A1 discloses an EGR controller for an internal combustion engine having a supercharger, comprising: an exhaust gas purification means (74) provided in an exhaust passage of the internal combustion engine; a low pressure EGR passage (13) for recirculating exhaust gas from the exhaust passage downstream of a turbine of the supercharger and of the exhaust gas purification means (74) to an intake passage of the internal combustion engine upstream of a compressor of the supercharger; a low pressure EGR control valve (76) provided in the low pressure EGR passage and controlling an amount of the recirculated exhaust gas; a throttle valve (78) provided in the intake passage connected to the low pressure EGR passage (13); and a controlling means (24) for controlling the throttle valve (78) so that a pressure difference in a predetermined range is formed between the upstream and downstream of the low pressure EGR control valve.

Disclosure of the Invention

The amount of EGR gas recirculated by the low pressure EGR device is changed according to a pressure difference in front of and behind (upstream and downstream of the EGR control valve which is provided in a passage through which the EGR gas passes for controlling the amount of EGR gas. It is desirable to control the pressure difference in order to recirculate a desired amount of EGR gas.

In the conventional art as described above, the back pressure valve is provided downstream from the point where the EGR passage is connected to the exhaust manifold. However, a manner for controlling the back pressure valve is not suggested at all.

One object of the present invention is to propose a manner for controlling a pressure difference in front of and behind an EGR control valve so as to control the amount of EGR gas recirculated by a low pressure EGR device more accurately.

The present invention provides an EGR controller for an internal combustion engine in according with claim 1 and a method for controlling EGR for an internal combustion engine according to claim 4. The EGR controller comprises a low pressure EGR passage (41 for recirculating exhaust gas from the exhaust passage downstream of the exhaust gas purification means to an intake passage of they internal combustion engine; a low pressure EGR control valve (42) provided in the low pressure EGR passage and controlling an amount of the recirculated exhaust gas; a throttle valve (43) provided in the exhaust passage connected to the low pressure EGR passage or the intake passage connected to the low pressure EGR passage; pressure detection means (44) for detecting a pressure between the throttle valve and the low pressure EGR control valve; and controlling means (1) for controlling the throttle valve based on the detected pressure so that a pressure difference within a predetermined range is formed between the upstream and downstream of the low pressure EGR control valve.

According to the present invention, the throttle valve is controlled (feedback control) based on the detected pressure so that a pressure difference within the predetermined range is formed between in front of and behind the low pressure EGR control valve. Because a desired pressure difference can be formed between in front of and behind the low pressure EGR control valve, a desired amount of exhaust gas can be stably recirculated.

According to one embodiment of the present invention, when the throttle valve is provided in the intake passage (Fig. 1), the pressure detection means (44) detects a pressure (P1) in the downstream of the low pressure EGR control valve. The controlling means controls the throttle valve so that a pressure difference of the downstream pressure relative to a pressure (P0) in the upstream of the low pressure EGR control valve is formed to be a predetermined value or less. When the throttle valve is provided in the exhaust passage (Fig. 8), the pressure detection means (44) detects a pressure (P4) in the upstream of the low pressure EGR control valve. The controlling means controls the throttle valve so that a pressure difference of the upstream pressure relative to the pressure (P0) in the downstream of the low pressure EGR control valve is formed to be a predetermined value or more. Thus, in either of the form of providing the throttle valve on the intake side and the form of providing the throttle valve on the exhaust side, a desired pressure difference is formed between in front of and behind the low pressure EGR control valve.

According to the present invention, the predetermined range is set within a pressure difference region (122) in which a change in the amount of exhaust gas recircualated via the low pressure EGR control valve relative to a pressure change in either one, having the throttle valve, of the upstream side and the downstream side of the low pressure EGR control valve, is small.

According to the present invention, the predetermined range is set within a pressure difference region in which a change in the amount of EGR flow relative to a pressure change is small. Thus, an abrupt change in the amount of EGR flow can be prevented. A desired amount of EGR flow can be maintained by the controlling means.

According to the present invention, the predetermined range is set within a pressure difference region (127) in which a pumping loss of the throttle valve has a predetermined value or less.

According to the present invention, the predetermined range is set within the pressure difference region so as to reduce the pumping loss. Thus, an increase of the pumping loss due to the operation of the throttle valve can be prevented.

Brief Description of the Drawings

Fig. 1 is a diagram schematically illustrating an internal combustion engine having a low pressure EGR device and a high pressure EGR device and its controller according to a first embodiment of the present invention.

Fig. 2 is a diagram for explaining a problem of reproducibility of an EGR rate of a low pressure EGR device.

Fig. 3 is a diagram illustrating a change in an amount of EGR flow relative to a pressure ratio between in front of and behind an EGR control valve according to an embodiment of the present invention.

Fig. 4(a) is a diagram illustrating a change in an amount of EGR flow relative to a pressure difference, and Fig. 4 (b) is a diagram illustrating a ratio of a pumping work relative to a pressure difference according to an embodiment of the present invention.

Fig. 5 is a flowchart of a process for controlling a low pressure EGR control valve via a feedback control of a throttle valve according to the first embodiment of the present invention.

Fig. 6 is a flowchart of a process for controlling a low pressure EGR control valve via a feedforward control of a throttle valve which is not part of the present invention.

Fig. 7 is a map illustrating a target opening of a throttle valve based on an operating state parameter.

Fig. 8 is a diagram schematically illustrating an internal combustion engine having a low pressure EGR device and a high pressure EGR device and its controller according to a second embodiment of the present invention.

Fig. 9 is a flowchart of a process for controlling a low pressure EGR control valve via a feedback control of a throttle valve according to the second embodiment of the present invention.

Fig. 10 is a flowchart of a process for controlling a low pressure EGR control valve via a feedforward control of a throttle valve which is not part of the present invention.

Fig. 11 is a flowchart of a process for controlling a low pressure EGR control valve via a feedback control and a feedforward control of a throttle valve according to the first embodiment of the present invention.

Best Mode for carrying out the Invention

Embodiments of the present invention will be described with reference to the drawings.

[First embodiment]

Fig. 1 is a schematic block diagram of an internal combustion engine (hereinafter referred to as an engine) and its controller according to a first embodiment of the present invention.

An electronic control unit (hereinafter referred to as an "ECU") 1 is a computer having a central processing unit (CPU) and a memory. The memory can store one or more computer programs for implementing various controls of a vehicle and data (including one or more maps) used for executing the programs. The ECU 1 receives and computes data transmitted from each part of the vehicle and generates one or more control signals for controlling each part of the vehicle.

In this embodiment, the engine 2 is a diesel engine. The engine 2, for example, has four cylinders and only one of them is illustrated in the drawing.

The engine 2 is coupled to an intake manifold 4 via an intake valve 3 and is coupled to an exhaust manifold 6 via an exhaust valve 5. A fuel injection valve 7 is attached so as to face a combustion chamber 9 formed above a piston 8. The fuel injection valve 7 is connected to a high pressure pump and a fuel tank (not illustrated) via a common-rail (not illustrated). The high pressure pump raises the pressure of fuel in the fuel tank and feeds the fuel to the fuel injection valve 7 via the common-rail. The fuel injection valve 7 injects the received fuel into the combustion chamber 9. The injection duration and the injector timing of the fuel injection valve 7 are controlled according to a control signal from the ECU 1.

A supercharger 10 is provided. The supercharger 10 has a rotatable compressor 11 provided in an intake passage 15 communicating with the intake manifold 4, a rotatable turbine 12 provided in an exhaust passage 16 communicating with the exhaust manifold 6, and a shaft 13 coupling these. The turbine 12 is rotationally driven by the kinetic energy of exhaust gas. The compressor 11 is rotationally driven by the rotational driving of the turbine 12 to compress intake air.

The turbine 12 has a plurality of rotatable variable vanes (only two are illustrated) 14 and varies the opening of the variable vanes 14 (hereinafter referred to as a vane opening) according to a control signal from the ECU 1. The rotational speed of the turbine 12 can be changed by varying the vane opening. As the variable vane opening is made smaller, the rotational speed of the turbine becomes higher, thereby increasing the boost pressure.

An air flow sensor 17 and an air cleaner 18 are provided in the intake passage 15 upstream of the compressor 11. A water cooling type intercooler 19 is provided downstream of the compressor 11. The air flow sensor 17 detects the amount of air (the amount of intake air) filtered by the air cleaner 18 and introduced into the intake passage 15. The detection signal is transmitted to the ECU 1. The intercooler 19 cools the intake air, for example when the temperature of the intake air is increased by the supercharging operation of the supercharger 10.

A throttle valve 20 is provided downstream of the intercooler 19. The throttle valve 20 is connected to an actuator. The actuator controls the opening of the throttle valve 20 according to a control signal from the-ECU 1.

An intake manifold pressure sensor 21 for detecting the pressure of the intake manifold 4 is provided downstream of the throttle valve 20. The detection value is transmitted to the ECU 1.

A filter (referred to as a DPF) 22 for collecting solid particulates such as uncombusted HC (hydrocarbon) in the exhaust gas and a catalytic device (referred to as an LNC) 23 adsorbing NOx in the exhaust gas are provided in the exhaust passage 16 downstream of the turbine 12. The exhaust gas is purified by these devices. Alternatively, as a means for purifying the exhaust gas, another device (such as a catalyst and/or a filter) may be provided.

A high pressure EGR passage 31 is connected between the intake manifold downstream of the compressor 11 and the throttle valve 20, and the exhaust manifold upstream of the turbine 12. Part of the exhaust gas of the engine 2 is recirculated as EGR gas to the intake manifold 4 via the high pressure EGR passage 31.

A high pressure EGR control valve 32 is provided in the high pressure EGR passage 31. The opening of the high pressure EGR control valve 32 is controlled by a control signal from the ECU 1. Therefore, the amount of the EGR gas recirculated to the intake manifold 4 via the high pressure EGR passage 31 can be controlled. An EGR cooler 33 is provided in the high pressure EGR passage 31. The EGR gas at a high temperature from the exhaust manifold 6 is cooled by the EGR cooler 33 and is then recirculated to the intake manifold 4.

A low pressure EGR passage 41 is connected between the intake passage upstream of the compressor 11 and the exhaust passage 16 downstream of the turbine 12 and the DPF 22. Part of the exhaust gas of the engine 2 is recirculated as the EGR gas to the intake passage 15 via the low pressure EGR passage 41. Alternatively, the exhaust side of the low pressure EGR passage 41 may be connected downstream of the catalytic device 23.

A low pressure EGR control valve 42 is provided in the low pressure EGR passage 41. The opening of the low pressure EGR control valve 42 is controlled by a control signal from the ECU 1. Therefore, the amount of the EGR gas (the amount of EGR) recirculated to the intake passage 15 via the low pressure EGR passage 41 can be controlled.

Thus, the EGR gas is recirculated, not only via the high pressure EGR passage 31, but also via the low pressure EGR passage 41. Therefore, the combustion temperature in the combustion chamber 9 can be lowered. NOx in the exhaust gas can be reduced.

The low pressure EGR passage 41 is connected between the intake passage upstream of the throttle valve 20 and the compressor 11, and the exhaust passage downstream of the turbine 12 and the DPF 22. Thus, a pressure difference between in front of and behind (upstream and downstream of) the low pressure EGR control valve 42 provided in the low pressure EGR passage 41 is very small. Therefore, another throttle valve 43 is provided so as to generate a pressure difference therebetween. The recirculation of the EGR gas flowing through the low pressure EGR passage 41 to the intake passage 15 can be promoted by the pressure difference thus generated.

In the first embodiment, the throttle valve 43 is provided upstream of a point where the low pressure EGR passage 41 is connected to the intake passage 15. The opening of the throttle valve 43 is adjusted to form a predetermined pressure in the downstream of the throttle valve 43. Accordingly, a desired pressure difference can be generated between the upstream and downstream of the low pressure EGR control valve 42.

The throttle valve 43 is connected to an actuator (not illustrated). The opening of the throttle valve 43 is controlled by the actuator according to a control signal from the ECU 1. A pressure sensor 44 is provided between the throttle valve 43 and the low pressure EGR control valve 42. The pressure in the downstream of the low pressure EGR control valve 42 (or in the upstream of the throttle valve 43) is detected. The detection signal is transmitted to the ECU 1.

The ECU 1 is connected to an atmospheric pressure (PA) sensor 51 for detecting the atmospheric pressure. A crank angle sensor 52 that outputs a crank pulse according to the rotation of a crankshaft (not illustrated) of the engine 2 is connected to the ECU 1. The ECU 1 can calculate the rotational speed (NE) of the engine 2 based on the crank pulse.

In response to detection signals from various sensors, the ECU 1 detects an operating state of the engine 2 and controls a fuel injection amount, a fuel injection timing, the amount of EGR, the amount of intake air, a boost pressure, and so on, according to one or more programs and data (including one or more maps) stored in the memory.

Here, the technical significance of the control of the throttle valve 43 according to the present invention will be described with reference to Figs. 2 to 4. Fig. 2 illustrates a result obtained by simulating the EGR rate (that is, the amount of EGR / (the amount of EGR + the amount of fresh air)) relative to the opening of the low pressure EGR control valve 42 as illustrated in Fig. 1 under the condition in which the rotational speed and the output torque of the engine are constant. The pressure adjustment by the throttle valve 43 in Fig. 1 was not performed. The reference numerals 101 and 102 show the EGR rate in the first and second simulations (cases 1 and 2), respectively. As shown by a region 103, when the low pressure EGR control valve is controlled to a predetermined opening, behavior of the EGR rate in the case 1 is different from behavior of the EGR rate in the case 2, which indicates that there is no reproducibility.

Here, the amount of intake air (which can be detected by the air flow sensor 17 of Fig. 1) in these simulations was observed. The reference numeral 104 shows the amount of intake air in the case 1. The reference numeral 105 shows the amount of intake air in the case 2. It is found that the EGR rate is different between the cases 1 and 2 according to the difference in the amount of intake air between the cases 1 and 2. This is because a pressure difference between in front of and behind the low pressure EGR control valve 42 fluctuates due to the variations in the amount of intake air. In order to prevent the absence of such reproducibility of the EGR rate, it is desirable to control the pressure difference between in front of and behind the low pressure EGR control valve 42 by the throttle valve 43.

Referring to Fig. 3, the pressure difference between in front of and behind the low pressure EGR control valve 42 will be considered. Fig. 3 illustrates a simulation result of the EGR flow amount relative to a pressure ratio (Pr = P / P0) between in front of and behind a typical EGR control valve. Here, a pressure P shows the pressure in the downstream of the EGR control valve, and a pressure P0 shows the pressure in the upstream of the EGR control valve. The pressure adjustment by the throttle valve 43 as illustrated in Fig. 1 was not performed.

As apparent from Fig. 1, the low pressure EGR passage 41 is connected to the intake passage 15 whose downstream is close to the atmosphere and to the exhaust passage 16 whose upstream is close to the atmosphere. Therefore, the pressure difference between in front of and behind the low pressure EGR control valve 42 is small. The pressure ratio Pr takes a value which is close to nearly 1. The pressure ratio Pr of the low pressure EGR control valve 42 exists in a region shown by the reference numeral 110. In the region, as shown by the reference numeral 114, a change in the EGR flow amount relative to a change in the pressure ratio Pr is large. On the other hand, the high pressure EGR control valve 32 will be described here for comparison. The high pressure EGR passage 31 is connected between the intake manifold 4 and the exhaust manifold 6 coupled to the cylinder of the engine. A pressure difference between in front of and behind the high pressure EGR control valve 32 is high. The pressure ratio Pr takes a value near about 0.6 and exists in a region shown by the reference numeral 111. In the region, as shown by the reference numeral 113, a change in the EGR flow amount relative to a change in the pressure ratio Pr is small. In summary, a change in the EGR flow amount relative to a change in the pressure difference between in front of and behind the low pressure EGR control valve 42 is large.

As described with reference to Fig. 2, it is desirable to control the pressure difference of the low pressure EGR control valve 42 by the throttle valve 43. However, in the region as shown by the reference numeral 110, even if a control by the throttle valve 43 is performed, it can be difficult to stably implement a desired EGR flow amount.

In one embodiment of the present invention, as a region of the pressure difference to be controlled by the throttle valve 43, a region in which a change in the EGR flow amount relative to a pressure change is small is selected. Fig. 4(a) illustrates an example of a result obtained by simulating a change in the EGR flow amount relative to a pressure differences $\Delta p$ between in front of and behind the low pressure EGR control valve 42. Here, the "change in the EGR flow amount" is calculated by (the EGR flow amount when the pressure P[kPa] in the downstream of the low pressure EGR control valve 42 is increased to (P+1)[kPa] / the EGR flow amount when the pressure in the downstream of the low pressure EGR control valve 42 is P[kPa]). That is, the "change in the EGR flow amount" represents how much the EGR flow amount is changed relative to the pressure difference $\Delta p$ when the pressure P in the downstream of the low pressure EGR control valve 42 is increased by 1[kPa) due to, for example, variations in the amount of intake air.

As apparent from the drawing, in a region 120 having the pressure difference Δp lower than about 5[kPa], a change in the EGR flow amount relative to a pressure change is large as shown by the reference numeral 121. In a region 122 having the pressure difference Δp larger than about 6 kPa, a change in the EGR flow amount relative to a pressure change is less than 10% as shown by the reference numeral 123. Therefore, when the pressure difference between in front of and behind the low pressure EGR control valve 42 falls within the pressure difference region 122 having about 6 kPa or more by the throttle valve 43, variations in the EGR flow amount can be greatly reduced. For example, when the pressure difference Δp is 10 kPa, a change in the EGR flow amount is about 5%.

Thus, the throttle valve 43 is controlled so as to form a pressure difference falling within the region 122 between in front of and behind the low pressure EGR control valve 42. Large variations in the EGR flow amount due to a pressure change can be thus prevented.

The throttle valve 43 is controlled so as to reduce the pumping loss of the throttle valve 43. Fig. 4(b) illustrates a ratio of a pumping work to the net work, relative to the pressure difference Δp between in front of and behind the low pressure EGR control valve 42. The engine 2 generates an output (work) by rotating the crankshaft connected to the piston (Fig. 1). The pumping work generated when the throttle valve 43 throttles air is a loss (referred to as a so-called "pumping loss") relative to the engine output. The net work is obtained by subtracting the loss such as the pumping work and so on, from the output generated by the engine.

As illustrated in the drawing, as the pressure difference Δp is increased, the pumping work of the throttle valve 43 is increased. This is because, as the pressure difference Δp is increased, the work required to operate the throttle valve 43 is increased. The pumping work changes depending on the load of the engine. As shown by the reference numeral 125, when the engine is at full load, the ratio of the pumping work is about 1.5% at the pressure difference Δp of about 10 kPa. As shown by the reference numeral 126, when the engine is at half load (which is middle load, and typically shows an averaged load in the normal running), the ratio of the pumping work at the pressure difference Δp of about 10 kPa is about 3%. Preferably, the ratio of the pumping work is lower. For example, it is preferable that the ratio of the pumping work is controlled to about 3% or less.

The pressure difference region is selected from the region 122 described with reference to Fig. 4(a) so that the ratio of the pumping work illustrated in Fig. 4(b) is reduced. A pressure difference region 127 of 6 to 10 kPa is selected. When the pressure difference of the low pressure EGR control valve 42 is controlled by the throttle valve 43 so as to fall within the region 127, the pumping work can be reduced without largely varying the EGR flow amount.

As described above, an object of the present invention is to control the throttle valve 43 so that the pressure difference between in front of and behind the low pressure EGR control valve falls within a predetermined range. The predetermined range is within the pressure difference region 122 selected so that a change in the EGR flow amount relative to a pressure change in the downstream of the low pressure EGR control valve is small. The predetermined range is the pressure difference region 127 in which the pumping loss of the throttle valve 43 is reduced.

A specific manner for forming a desired pressure difference between in front of and behind the low pressure EGR control valve 42 via a control of the throttle valve 43 will be described below.

[Example according to the first embodiment]

A manner for controlling the throttle valve 43 and the low pressure EGR control valve 42 according to the first embodiment in which the throttle valve 43 is provided on the intake side, as illustrated in Fig. 1, will be described.

Fig. 5 is a flowchart of a process for controlling the low pressure EGR control valve 42 via a feedback control of the throttle valve 43. The process is performed at predetermined time intervals by the CPU of the ECU 1.

In step S1, an actual pressure P1 in the downstream of the low pressure EGR control valve 42 is detected as P1_act based on the detection value of the pressure sensor 44 (Fig. 1). In step S2, a target value P1_cmd of the pressure in the downstream of the low pressure EGR control valve 42 is determined. The target value P1_cmd is set so that a desired pressure difference is generated.

Because the upstream of the low pressure EGR control valve 42 is connected to the exhaust passage 16, the upstream pressure of the low pressure EGR control valve 42 can be considered to be almost the atmospheric pressure. Therefore, the target value P1_cmd in the downstream of the low pressure EGR control valve is set to a value (P0 - a desired pressure difference) that is obtained by subtracting the desired pressure difference from the atmospheric pressure P0. In doing so, the upstream pressure of the low pressure EGR control valve 42 is P0, and the downstream pressure becomes (P0 - a desired pressure difference). As a result, the desired pressure difference is generated between in front of and behind the low pressure EGR control valve 42. Here, the atmospheric pressure P0 can be detected from the atmospheric pressure sensor 51 (Fig. 1).

Alternatively, a second pressure sensor may be provided upstream of the low pressure control valve 42. The detection value of the second pressure sensor may be used as P0.

As described with reference to Fig. 4(a), the desired pressure difference is set so as to fall within the pressure difference region 122 in which a change in the EGR flow amount relative to a pressure change is small. As described with reference to Fig. 4(b), the desired pressure difference is set so as to fall within the pressure difference region 127 so as to reduce the pumping loss of the throttle valve 43. In this example, the desired pressure difference is set to 10 kPa. Accordingly, a change in the EGR flow amount can be reduced to about 5% while the pumping loss can be reduced to about 3%.

In step S3, a difference errP1 between the actual pressure P1_act and the target pressure P1_cmd is calculated. In step S4, as shown by the following equation, a predetermined PI control is performed so as to cause the difference errP1 to converge to zero to calculate a target opening $\theta_{LPL_TH}$ of the throttle valve 43. Here, $KP_{TH}$ is the P (proportion) term gain, and $KI_{TH}$ is the I (integration) term gain. They are set to values determined via a simulation or the like.

[Equation 1]

$$\theta_{LPL_TH} = KP_{TH} \times errP1 + KI_{TH} \times \int errP1$$

The throttle valve 43 is controlled via a control signal to reach the calculated target opening $\theta_{LPL_TH}$. Thus, the opening of the throttle valve 43 is controlled so that the desired pressure difference is generated. In this example, although the PI control is used, another control manner may be used to cause the difference errP1 to converge.

Steps S5 to S8 are a process for controlling the low pressure EGR control valve 42. In step S5, the amount of fresh intake air is detected as Qair_act from the detection value of the air flow sensor 17 (Fig. 1). In step S6, a target value of the amount of fresh intake air is determined based on the operating state of the engine 2. The target value can be determined by referring to a predetermined map (which can be stored in the memory of the ECU 1) based on the detected engine rotational speed NE (which can be detected from an output of the crank angle sensor 52) and the engine load (which can be detected from the intake manifold pressure sensor 21).

In step S7, a difference err between the actual value Qair_act of the amount of fresh intake air and the target value Qair_cmd is calculated. In step S8, as shown by the following equation, a predetermined PI control is performed so as to cause the difference err to converge to zero to calculate an opening $\theta_{LPL_EGR}$ of the low pressure EGR control valve 42. Here, $KP_{EGR}$ is the P (proportion) term gain, and $KI_{EGR}$ is the I (integration) term gain. They are set to values determined via a simulation or the like.

[Equation 2]

$$\theta_{LPL_EGR} = KP_{EGR} \times err + KI_{EGR} \times \int err$$

Accordingly, the low pressure EGR control valve 42 is controlled via a control signal to reach the calculated opening $\theta_{LPL_EGR}$. In this example, although the PI control is used, another control manner may be used to cause the difference err to converge.

Thus, the EGR rate of the low pressure EGR control valve 42 can be controlled by controlling the pressure difference between in front of and behind the low pressure EGR control valve 42 via the feedback control of the throttle valve 43. Further, the pressure difference between in front of and behind the low pressure EGR control valve 42 is controlled via the feedback control of the throttle valve 43 so as to fall within the pressure difference region in which a change in the EGR flow amount relative to a change in pressure is small. Therefore, large variations in the EGR flow amount can be prevented. Further, the pressure difference between in front of and behind the low pressure EGR control valve 42 is controlled so as to fall within the pressure difference region in which the pumping loss of the throttle valve 43 is reduced. Therefore, the pumping loss due to the operation of the throttle valve 43 can be reduced.

Fig. 6 is a flowchart of a process for controlling the low pressure EGR control valve 42 via a feedforward control of the throttle valve 43. The process is performed at predetermined time intervals by the CPU of the ECU 1.

In step S11, an operating state parameter showing the amount of intake air or the amount of exhaust gas of the engine is detected as x For example, the detection value Qair_act of the air flow sensor 17 (Fig. 1) can be used as such an operation state parameter. Alternatively, the engine rotational speed NE and the intake manifold pressure PB, the engine rotational speed NE and the output torque, and the engine rotational speed NE and the engine load may be used as the operating state parameters showing the amount of intake air and the amount of exhaust gas, respectively

In step S12, a predetermined map (which can be stored in the memory of the ECU 1) is referred to based on the operating state parameter x to determine a target opening $\theta_{LPL_TH}$ of the throttle valve 43.

Fig. 7 illustrates an example of the map. The map is set so that as the operating state parameter x (in this example, the amount of intake air Qair_act) is increased, the opening of the throttle valve 43 becomes larger. When the opening of the throttle valve 43 is constant, the pressure difference between in front of and behind the throttle valve 43 is increased as the amount of intake air Qair_act becomes larger. Therefore, in order to maintain the desired pressure difference, as the amount of intake air Qair_act is increased, the opening of the throttle valve 43 becomes larger.

Preferably, in the map, the target opening $\theta_{LPL_TH}$ of the throttle valve 43 is defined to generate the pressure difference so as to fall within the pressure difference region 122 or 127 described with reference to Figs. 4(a) and 4(b). For example, via a simulation or the like, the opening of the throttle valve 43 for maintaining the pressure difference 10 kPa is determined relative to the amount of intake air and can be defined in the map.

When the amount of exhaust gas is used as the operating state parameter, a similar map is defined. As the amount of intake air is increased, the amount of exhaust gas becomes larger. Therefore, the map is defined so that the opening of the throttle valve 43 is increased as the amount of the exhaust gas becomes larger.

The throttle valve 43 is controlled via a control signal to reach the determined target opening $\theta_{LPL_TH}$. Accordingly, the desired pressure difference is generated between in front of and behind the low pressure EGR control valve 42.

Steps S15 to S18 are a process for controlling the low pressure EGR control valve 42 and are similar to steps S5 to S8 of Fig. 5, and the description thereof is omitted.

[Second embodiment]

Fig. 8 is a schematic block diagram of an internal combustion engine (hereinafter referred to as an engine) and its controller according to a second embodiment of the present invention. Only the points different from Fig. 1 will be described.

In the second embodiment, the throttle valve 43 is provided downstream of a point where the low pressure EGR passage 41 is connected to the exhaust passage 16. The opening of the throttle valve 43 is adjusted to form a predetermined pressure in the upstream of the throttle valve 43. Thus, a desired pressure difference can be generated between the upstream and downstream of the low pressure EGR control valve 42.

The throttle valve 43 is connected to an actuator (not illustrated). The opening of the throttle valve 43 is controlled by the actuator according to a control signal from the ECU 1. The pressure sensor 44 is provided between the throttle valve 43 and the low pressure EGR control valve 42 to detect the pressure in the upstream of the low pressure EGR control valve 42 (or in the downstream of the throttle valve 43). The detection signal is transmitted to the ECU 1.

The description with reference to Figs. 4(a) and 4(b) is basically applied to the second embodiment. Specifically, the throttle valve 43 is controlled so that a pressure difference between in front of and behind the low pressure EGR control valve 42 falls within a predetermined range. The predetermined range is the pressure difference region 122 in which a change in the EGR flow amount relative to a pressure change in the upstream of the low pressure EGR control valve 42 is small (Fig. 4(a)). The predetermined range is the pressure difference region 127 in which the pumping loss of the throttle valve 43 is reduced (Fig. 4(b)).

[Example according to the second embodiment]

A manner for controlling the throttle valve 43 and the low pressure EGR control valve 42 according to the second embodiment in which the throttle valve 43 is provided on the exhaust side, as illustrated in Fig. 8, will be described.

Fig. 9 is a flowchart of a process for controlling the low pressure EGR control valve 42 via a feedback control of the throttle valve 43. The process is performed at predetermined time intervals by the CPU of the ECU 1.

In step S21, an actual pressure P4 in the upstream of the low pressure EGR control valve 42 is detected as P4_act based on the detection value of the pressure sensor 44 (Fig. 8). In step S22, a target value P4_cmd of the pressure in the upstream of the low pressure EGR control valve 42 is determined. The target value P4_cmd is set so that a desired pressure difference is generated.

The downstream of the low pressure EGR control valve 42 is connected to the intake passage 15. The downstream pressure of the low pressure EGR control valve 42 can be considered to be almost the atmospheric pressure P0. Therefore, the target value P4_cmd of the pressure in the upstream of the low pressure EGR control valve is set to a value (P0 + a desired pressure difference) that is obtained by adding the desired pressure difference to the atmospheric pressure P0. In doing so, the downstream pressure of the low pressure EGR control valve 42 is P0, and the upstream pressure becomes (P0 + a desired pressure difference). As a result, the desired pressure difference is generated between in front of and behind the low pressure EGR control valve 42. Here, the atmospheric pressure P0 can be detected from the atmospheric pressure sensor 51 (Fig. 8).

Alternatively, a second pressure sensor may be provided downstream of the low pressure control valve 42. The detection value of the second pressure sensor may be used as P0.

As described with reference to Fig. 4(a), the desired pressure difference is set so as to fall within the pressure difference region 122 in which a change in the EGR flow amount relative to a pressure change is small. As described with reference to Fig. 4(b), the desired pressure difference is set so as to fall within the pressure difference region 127 so as to reduce the pumping loss of the throttle valve 43. In this example, the desired pressure difference is set to 10 kPa. Accordingly, a change in the EGR flow amount can be reduced to about 5% while the pumping loss can be reduced to about 3%.

In step S23, a difference errP4 between the actual pressure P4_act and the target pressure P4_cmd is calculated. In step S24, as shown by the following equation, a predetermined PI control is performed so as to cause the difference errP4 to converge to zero to calculate a target opening $\theta_{LPL_TH}$ of the throttle valve 43. Here, $KP_{TH}$ is the P (proportion) term gain, and Ruth is the I (integration) term gain. They are set to values determined via a simulation or the like.

[Equation 3]

$$\theta_{LPL_TH} = KP_{TH} \times errP1 + KI_{TH} \times \int errP1$$

The throttle valve 43 is controlled via a control signal to reach the calculated target opening $\theta_{LPL_TH}$. Thus, the opening of the throttle valve 43 is controlled so that the desired pressure difference is generated. In this example, although the PI control is used, another control manner may be used for causing the difference errP4 to converge.

Steps S25 to S28 are a process for controlling the low pressure EGR control valve 42 and are similar to steps S5 to S8 of Fig. 5, and the description thereof is omitted.

Fig. 10 is a flowchart of a process for controlling the low pressure EGR control valve 42 via a feedfoward control of the throttle valve 43. The process is performed at predetermined time intervals by the CPU of the ECU 1.

In step S31, an operating state parameter showing the amount of intake air or the amount of exhaust gas of the engine is detected as x. For example, the detection value Qair_act of the air flow sensor 17 (Fig. 8) can be used as such an operateing state parameter. Alternatively, the engine rotational speed NE and the intake manifold pressure PB, the engine rotational speed NE and the output torque, and the engine rotational speed NE and the engine load may be used as the operating state parameters showing the amount of intake air and the amount of exhaust gas, respectively.

In step S32, a predetermined map (which can be stored in the memory of the ECU 1) is referred to based on the operating state parameter x to determine a target opening $\theta_{LPL_TH}$ of the throttle valve 43. The predetermined map is the same as that illustrated in Fig. 7. The description with reference to Fig. 7 holds true. Specifically, in the map, as the amount of intake air Qair_act is increased, the target opening of the throttle valve 43 becomes larger. In the map, the target opening $\theta_{LPL_TH}$ of the throttle valve is defined so that the pressure difference that falls within the pressure difference region 122 or 127 described with reference to Figs. 4(a) and 4(b) is generated. When the amount of exhaust gas is used as the operating state parameter, a similar map is defined.

The throttle valve 43 is controlled via a control signal to reach the determined target opening $\theta_{LPL_TH}$. Thus, the desired pressure difference is generated between in front of and behind the low pressure EGR control valve 42.

Steps S35 to S38 are a process for controlling the low pressure EGR control valve 42 and are similar to steps S25 to S28 of Fig. 9, and the description thereof is omitted.

Fig. 11 is a flowchart of a process for controlling the opening of the throttle valve 43 using both a feedforward control and a feedback control to control the low pressure EGR control valve 42 via these controls, according to the first embodiment illustrated in Fig. 1. The process is performed at predetermined time intervals by the CPU of the ECU 1. When both the controls are used, the opening of the throttle valve 43 can be corrected by a feedforward control so as to reduce the influence due to a change (disturbance) in the operating state parameter x, while the opening of the throttle valve 43 can converge to a target opening robustly relative to such disturbance by a feedback control Therefore, the control accuracy of the throttle valve 43 can be improved.

Steps S41 and S42 are a process for calculating a feedforward term and are similar to steps S11 and S12 of Fig. 6. Specifically an operating state parameter (in this example, the amount of intake air Qair_act detected by the air flow sensor 17) based on the amount of intake air or the amount of exhaust gas is detected as x. The map as illustrated in Fig. 7 is referred to based on the amount of intake air Qair_act. The opening $\theta_{LPL_TH}$ of the throttle valve 43 is calculated as a feedforward term $\theta_{LPL_TH_ff}$.

Steps S43 to S46 are a process for calculating a feedback term and are similar to steps S1 to S4 of Fig. 5. The PI control is performed so as to cause the difference errP1 between the detection value P1_act and the target value P1_cmd of the pressure sensor 44 to converge to zero. The opening $\theta_{LPL_TH}$ of the throttle valve 43 is calculated as a feedback term $\theta_{LPL_TH_fb}$. In step 547, the feedforward term and the feedback term are added to calculate a target opening $\theta_{LPL_TH}$ of the throttle valve 43.

The throttle valve 43 is controlled via a control signal to reach the calculated target opening $\theta_{LPL_TH}$. Thus, the opening of the throttle valve 43 is controlled so that a desired pressure difference is generated. In this example, although the PI control is used, another control manner may be used for causing the difference errP1 to converge.

Steps S55 to S58 are similar to steps S5 to S8 of Fig. 5, and the description thereof is omitted.

The use of the feedforward control and the feedback control together is applicable to the second embodiment (Fig. 8) provided with the throttle valve 43 on the exhaust side.

The above embodiments have been described by taking the diesel engine as an example. The present invention is applicable to other engines (for instance, a typical gasoline engine).

In the above embodiments, the amount of air taken into the engine 2 is controlled by the throttle valve 20. Alternatively, in place of the throttle valve 20, the amount of air taken into the engine 2 may be controlled by the amount of lift of the intake valve 3. Further, the present invention is applicable to a form which the supercharger 10 is not provided. When the throttle valve 20 and the supercharger 10 are not provided, the intake side of the low pressure EGR passage 41 is connected upstream from a point where the high pressure EGR passage 31 is connected to the intake manifold. The exhaust side of the low pressure EGR passage 41 is connected downstream of the exhaust gas purification means (in the above embodiments, the DPF 22 or the catalytic device 23).

The above embodiments are applicable to an internal combustion engine for general purpose use (such as an outboard engine).

## Claims

**1.** An EGR con-troller for an internal combustion engine having a supercharger (10), comprising:

an exhaust gas purification means (22) provided in an exhaust passage (16) of the internal combustion engine (2);
a low pressure EGR passage (41) for recirculating exhaust gas from the exhaust passage (16) downstream of the exhaust gas purification means (22) and a turbine (12) of the supercharger (10) to an intake passage (15) of the internal combustion engine upstream of a compressor (11) of the supercharger (10);
a low pressure EGR control valve (42) provided in the low pressure EGR passage (41) and controlling an amount of the recirculated exhaust gas;
a throttle valve (43) provided in the exhaust passage (16) connected to the low pressure EGR passage (15) or the intake passage connected to the low pressure EGR passage;
a pressure detection means (44) for detecting a pressure between the throttle valve (42) and the low pressure EGR control valve (42); and
a controlling means (1) for controlling the throttle valve (43) based on the detected pressure so that a pressure difference (Δp) in a predetermined range of 6 kpa or more and 10 kpa or less is formed between the upstream and downstream of the low pressure EGR control valve (42),
wherein the predetermined range is set within a pressure difference region (127) in which a change in the amount of exhaust gas recirculated via the low pressure EGR control valve (42) relative to a pressure change (123) in either one, having the throttle valve (43), of the upstream side and the downstream side of the low pressure EGR control valve (42), is less than 10%.

**2.** The EGR controller of an internal combustion engine according to claim 1,
wherein when the throttle valve (43) is provided in the intake passage (15), the pressure detection means (44) detects a pressure in the downstream of the low pressure EGR control valve (42), and the controlling means (1) controls the throttle valve (43) so that the pressure in the downstream of the low pressure EGR control valve (42) forms the pressure difference (Δp) within the predetermined range of 6 kpa or more and 10 kpa or less, relative to a pressure in the upstream of the low pressure EGR control valve (42),
wherein when the throttle valve (43) is provided in the exhaust passage (16), the pressure detection means (44) detects a pressure in the upstream of the low pressure EGR control valve (42), and the controlling means (1) controls the throttle valve (43) so that the pressure in the up-stream of the low pressure EGR control valve (42) forms the pressure difference (Δp) within the predetermined range of 6 kpa or more and 10 kpa or less, of the upstream pressure relative to the pressure in the downstream of the low pressure EGR control valve (42).

**3.** The EGR controller of an internal combustion engine according to claim 1 or 2,
wherein the predetermined range of 6 kpa or more and 10 kpa or less is a pressure range (127) in which a pumping loss of the throttle valve (43) has a predetermined value or less.

**4.** A method for controlling EGR for an internal combustion engine having supercharger (10), comprising:

re-circulating exhaust gas from the downstream of a turbine (12) of the supercharger (10) and an exhaust gas purification means (22) provided in an exhaust passage (16) of the internal combustion engine via a low pressure EGR passage (41) to an intake passage (15) of the internal combustion engine upstream of a compressor (11) of the supercharger (10);
controlling an amount of the re-circulated exhaust gas by a low pressure EGR control valve (42) provided in the low pressure EGR passage (41);
detecting a pressure between a throttle valve (43) provided in the exhaust passage (16) connected to the low pressure EGR passage (41) or the intake passage (15) connected to the low pressure EGR passage (41) and the low pressure EGR control valve (42); and
controlling the throttle valve (43) based on the detected pressure so that a pressure difference (Δp) within a predetermined range of 6 kpa or more and 10 kpa or less is formed between the upstream and downstream of the low pressure EGR control valve (42),
wherein the predetermined range is set within a pressure difference region (127) in which a change in the amount of exhaust gas re-circulated via the low pressure EGR control valve (42) relative to a pressure change (123) in either one, having the throttle valve (42), of the upstream side and the downstream side of the low pressure EGR control valve (42), is less than 10%.

**5.** The method according to claim 4,
wherein when the throttle valve (43) is provided in the intake passage (15), the detecting step detects a pressure in the downstream of the low pressure EGR control valve (42), and the step of controlling the throttle valve controls the throttle valve (43) so that the pressure in the downstream of the low pressure EGR control valve (42) forms the pressure difference (Δp) within the predetermined range of 6 kpa or more and 10 kpa or less, relative to a pressure in the upstream of the low pressure EGR control valve (42),
wherein when the throttle valve (43) is provided in the exhaust passage (16), the detecting step detects a pressure in the upstream of the low pressure EGR control valve (42), and the step of controlling the throttle valve controls the throttle valve (43) so that the pressures in the down-stream of the low pressure EGR control valve (42) forms the pressure difference (Δp) within the predetermined range of 6 kpa or more and 10 kpa or less, relative to the pressure in the downstream of the low pressure EGR control valve (42).

**6.** The method according to claim 4 or 5,
wherein the predetermined range of 6 kpa or more and 10 kpa or less is a pressure range (127) in which a pumping loss of the throttle valve (42) has a predetermined value or less.

**Patentansprüche**

**1.** AGR-Steuer/Regelvorrichtung für einen einen Auflader (10) aufweisenden Verbrennungsmotor, umfassend:

ein Abgasreinigungsmittel (22), das in einem Auspuffkanal (16) des Verbrennungsmotors (2) vorgesehen ist;
einen Niederdruck-AGR-Kanal (41) zur Abgasrückführung von dem Auspuffkanal (16) stromab des Abgasreinigungsmittels (22) und einer Turbine (12) des Aufladers (10) zu einem Einlasskanal (15) des Verbrennungsmotors stromauf eines Kompressors (11) des Aufladers (10);
ein Niederdruck-AGR-Steuerungsventil (42), das in dem Niederdruck-AGR-Kanal (41) vorgesehen ist und eine Menge des rückgeführten Abgases steuert/regelt;
ein Drosselventil (43), das in dem mit dem Niederdruck-AGR-Kanal verbundenen Auspuffkanal (16) oder dem mit dem Niederdruck-AGR-Kanal verbundenen Einlasskanal verbunden ist;
ein Druckerfassungsmittel (44) zum Erfassen eines Drucks zwischen dem Drosselventil (42) und dem Niederdruck-AGR-Steuerungsventil (42), und
ein Steuerungsmittel (1) zum Steuern/Regeln des Drosselventils (43) basierend auf dem erfassten Druck, so dass eine Druckdifferenz (Δp) in einem vorbestimmten Bereich von 6kpa oder mehr und 10kpa oder weniger zwischen der stromaufwärtigen und der stromabwärtigen Seite des Niederdruck-AGR-Steuerungsventils (42) erzeugt wird,
worin der vorbestimmte Bereich in eine Druckdifferenzregion (127) gelegt ist, in der eine Änderung in der über das Niederdruck-AGR-Steuerungsventil (42) rückgeführten Abgasmenge relativ zu einer Druckänderung (123) in einer von der das Drosselventil (43) aufweisenden stromaufwärtigen Seite und der stromabwärtigen Seite des Niederdruck-AGR-Steuerungsventils (42) weniger als 10% ist.

**2.** Die AGR-Steuer/Regelvorrichtung eines Verbrennungsmotors nach Anspruch 1,
worin, wenn das Drosselventil (43) in dem Einlasskanal (15) vorgesehen ist, das Druckerfassungsmittel (44) einen Druck in der stromabwärtigen Seite des Niederdruck-AGR-Steuerungsventils (42) erfasst, und das Steuerungsmittel (1) das Drosselventil (43) derart steuert/regelt, dass der Druck in der stromabwärtigen Seite des Niederdruck-AGR-Steuerungsventils (42) die Druckdifferenz (Δp) innerhalb des vorbestimmten Bereichs von 6kpa oder mehr oder 10kpa oder weniger relativ zu einem Druck in der stromaufwärtigen Seite des Niederdruck-AGR-Steuerungsventils (42) erzeugt, worin, wenn das Drosselventil (43) in dem Auslasskanal (16) vorgesehen ist, das Druckerfassungsmittel (44) einen Druck in der stromaufwärtigen Seite des Niederdruck-AGR-Steuerungsventils (42) erfasst, und das Steuerungsmittel (1) das Drosselventil (43) derart steuert/regelt, dass der Druck in der stromaufwärtigen Seite des Niederdruck-AGR-Steuerungsventils (42) die Druckdifferenz (Δp) innerhalb des vorbestimmten Bereichs von 6kpa oder mehr und 10kpa oder weniger des stromaufwärtigen Drucks relativ zu dem Druck in der stromabwärtigen Seite des Niederdruck-AGR-Steuerungsventils (42) erzeugt.

3. Die AGR-Steuer/Regelvorrichtung eines Verbrennungsmotors nach Anspruch 1 oder 2, worin der vorbestimmte Bereich von 6kpa oder mehr und 10kpa oder weniger ein Druckbereich (127) ist, in dem ein Pumpverlust des Drosselventils (43) einen vorbestimmten Wert oder weniger hat.

4. Verfahren zur AGR-Steuerung/Regelung für einen einen Auflader (10) aufweisenden Verbrennungsmotor, umfassend:

   Rückführen von Abgas von der stromabwärtigen Seite einer Turbine (12) des Aufladers (10) und eines Abgasreinigungsmittels (22), das in einem Auspuffkanal (16) des Verbrennungsmotors (10) vorgesehen ist, über einen Niederdruck-AGR-Kanal (41) zu einem Einlasskanal (15) des Verbrennungsmotors stromauf eines Kompressors des Aufladers (10);
   Steuern/Regeln einer Menge des rückgeführten Abgases durch ein Niederdruck-AGR-Steuerungsventil (42), das in dem Niederdruck-AGR-Kanal (41) vorgesehen ist;
   Erfassen eines Drucks zwischen einem Drosselventil (43), das in dem mit dem Niederdruck-AGR-Kanal (41) verbundenen Auspuffkanal (16) oder dem mit dem Niederdruck-AGR-Kanal (41) verbundenen Einlasskanal (15) vorgesehen ist, und dem Niederdruck-AGR-Steuerungsventil (42); und
   Steuern/Regeln des Drosselventils (43) basierend auf dem erfassten Druck, so dass eine Druckdifferenz (Δp) innerhalb eines vorbestimmten Bereichs von 6kpa oder mehr und 10kpa oder weniger zwischen der stromaufwärtigen und der stromabwärtigen Seite des Niederdruck-AGR-Steuerungsventils (42) erzeugt wird,
   worin der vorbestimmte Bereich in eine Druckdifferenzregion (127) gelegt ist, in der eine Änderung in der über das Niederdruck-AGR-Steuerungsventil (42) rückgeführten Abgasmenge relativ zu einer Druckänderung (123) in einer von der das Drosselventil (43) aufweisenden stromaufwärtigen Seite und der stromabwärtigen Seite des Niederdruck-AGR-Steuerungsventils (42) weniger als 10% ist.

5. Das Verfahren nach Anspruch 4, worin, wenn das Drosselventil (43) in dem Einlasskanal (15) vorgesehen ist, der Erfassungsschritt einen Druck in der stromabwärtigen Seite des Niederdruck-AGR-Steuerungsventils (42) erfasst, und der Schritt des Steuerns/Regelns des Drosselventils das Drosselventil (43) derart steuert/regelt, dass der Druck in der stromabwärtigen Seite des Niederdruck-AGR-Steuerungsventils (42) die Druckdifferenz (Δp) innerhalb des vorbestimmten Bereichs von 6kpa oder mehr oder 10kpa oder weniger relativ zu einem Druck in der stromaufwärtigen Seite des Niederdruck-AGR-Steuerungsventils (42) erzeugt,
   worin, wenn das Drosselventil (43) in dem Auslasskanal (16) vorgesehen ist, der Erfassungsschritt einen Druck in der stromaufwärtigen Seite des Niederdruck-AGR-Steuerungsventils (42) erfasst, und der Schritt des Steuerns/Regelns des Drosselventils das Drosselventil (43) derart steuert/regelt, dass der Druck in der stromabwärtigen Seite des Niederdruck-AGR-Steuerungsventils (42) die Druckdifferenz (Δp) innerhalb des vorbestimmten Bereichs von 6kpa oder mehr und 10kpa oder weniger relativ zu dem Druck in der stromabwärtigen Seite des Niederdruck-AGR-Steuerungsventils (42) erzeugt.

6. Das Verfahren nach Anspruch 4 oder 5, worin der vorbestimmte Bereich von 6kpa oder mehr und 10kpa oder weniger ein Druckbereich (127) ist, in dem ein Pumpverlust des Drosselventils (43) einen vorbestimmten Wert oder weniger hat.

## Revendications

1. Dispositif de commande d’EGR pour un moteur à combustion interne ayant un compresseur à suralimentation (10), comprenant :

des moyens de purification des gaz d'échappement (22) prévus dans un passage d'échappement (16) du moteur à combustion interne (2) ;
un passage d'EGR basse pression (41) pour faire recirculer les gaz d'échappement du passage d'échappement (16) en aval des moyens de purification de gaz d'échappement (22) et une turbine (12) du compresseur à suralimentation (10) vers un passage d'admission (15) du moteur à combustion interne en amont d'un compresseur (11) du compresseur à suralimentation (10) ;
une soupape de commande d' EGR basse pression (42) prévue dans le passage d'EGR basse pression (41) et commandant une quantité des gaz d'échappement recirculés ;
un papillon des gaz (43) prévu dans le passage d'échappement (16) raccordé au passage d'EGR basse pression (15) ou au passage d'admission raccordé au passage d'EGR basse pression ;
des moyens de détection d'une pression (44) pour détecter une pression entre le papillon des gaz (43) et la soupape de commande d'EGR basse pression (42) ; et des moyens de commande (1) pour commander le papillon des gaz (43) sur la base de la pression détectée de sorte qu'une différence de pression (Δp) dans une plage prédéterminée de 6 kPa ou plus et de 10 kPa ou moins est formée entre l'amont et l'aval de la soupape de commande d'EGR basse pression (42),
dans lequel la plage prédéterminée est établie dans une zone de différence de pression (127) dans laquelle un changement de la quantité de gaz d'échappement recirculés via la soupape de commande d'EGR basse pression (42) par rapport à un changement de pression (123) dans l'un ou l'autre, en ayant le papillon des gaz (43), du côté amont et du côté aval de la soupape de commande d'EGR basse pression (42) est inférieur à 10%.

**2.** Dispositif de commande d' EGR d' un moteur à combustion interne selon la revendication 1, dans lequel le papillon des gaz (43) est prévu dans le passage d'admission (15), les moyens de détection de pression (44) détectent une pression en aval de la soupape de commande d'EGR basse pression (42), et les moyens de commande (1) commandent le papillon des gaz (43) de sorte que la pression en aval de la soupape de commande d'EGR basse pression (42) forme la différence de pression (Δp) dans la plage prédéterminée de 6 kPa ou plus et de 10 kPa ou moins, par rapport à une pression en amont de la soupape de commande d'EGR basse pression (42),
dans lequel lorsque le papillon des gaz (43) est prévu dans le passage d'échappement (16) les moyens de détection de pression (44) détectent une pression en amont de la soupape de commande d'EGR basse pression (42) ; et les moyen de commande (1) commandent le papillon des gaz (43) de sorte que la pression en amont de la soupape de commande d'EGR basse pression (42) forme la différence de pression (Δp) dans la plage prédéterminée de 6 kPa ou plus et de 10 kPa ou moins, de la pression amont par rapport à la pression en aval de la soupape de commande d'EGR basse pression (42).

**3.** Dispositif de commande d' EGR d' un moteur à combustion interne selon la revendication 1 ou 2, dans lequel la plage prédéterminée de 6 kPa ou plus et de 10 kPa ou moins est une plage de pression (127) dans laquelle une perte de pompage du papillon des gaz (43) a une valeur prédéterminée ou moins.

**4.** Procédé de contrôle d'EGR pour un moteur à combustion interne ayant un compresseur à suralimentation (10), comprenant :

la recirculation des gaz d'échappement de l'aval d'une turbine (12) du compresseur à suralimentation (10) et des moyens de purification des gaz d'échappement (22) prévus dans un passage d'échappement (16) du moteur à combustion interne via un passage d'EGR basse pression (41) vers un passage d'admission (15) du moteur à combustion interne en amont d'un compresseur (11) du compresseur à suralimentation (10) ;
la commande d'une quantité de gaz d'échappement recirculés par une soupape de commande d'EGR basse pression (42) prévue dans le passage d'EGR basse pression (41) ;
la détection d'une pression entre un papillon des gaz (43) prévu dans le passage d'échappement (16) raccordé au passage d'EGR basse pression (41) ou au passage d'admission (15) raccordé au passage d'EGR basse pression (41) et à la soupape de commande d'EGR basse pression (42) ; et
la commande du papillon des gaz (43) sur la base de la pression détectée de sorte qu'une différence de pression (Δp) dans une plage prédéterminée de 6 kPa ou plus et de 10 kPa ou moins est formée entre l'amont et l'aval de la soupape de commande d'EGR basse pression (42),
dans lequel la plage prédéterminée est établie au sein d'une zone de différence de pression (127) dans laquelle un changement de la quantité de gaz d'échappement recirculés via la soupape de commande d'EGR basse pression (42) par rapport à un changement de pression (123) dans l'un ou l'autre, en ayant le papillon des gaz (43), du côté amont et du côté aval de la soupape de commande d'EGR basse pression (42) est inférieur à 10%.

**5.** Procédé selon la revendication 4, dans lequel lorsque le papillon des gaz (43) est prévu dans le passage d'admission (15), l'étape de détection détecte une pression en aval de la soupape de commande d'EGR basse pression (42), et l'étape de commande du papillon des gaz commande le papillon des gaz (43) de sorte que la pression en aval de la soupape de commande d'EGR basse pression (42) forme la différence de pression (Δp) dans la plage prédéterminée de 6 kPa ou plus et de 10 kPa ou moins, par rapport à une pression en amont de la soupape de commande d'EGR basse pression (42),
dans lequel lorsque le papillon des gaz (43) est prévu dans le passage d'échappement (16), l'étape de détection détecte une pression en amont de la soupape de commande d'EGR basse pression (42), et l'étape de commande du papillon des gaz commande le papillon des gaz (43) de sorte que la pression en aval de la soupape de commande d'EGR basse pression (42) forme la différence de pression (Δp) dans la plage prédéterminée de 6 kPa ou plus et de 10 kPa ou moins, par rapport à la pression en aval de la soupape de commande d'EGR basse pression (42).

**6.** Procédé selon la revendication 4 ou 5, dans lequel la plage prédéterminée de 6 kPa ou plus et de 10 kPa ou moins est une plage de pression (127) dans laquelle une perte de pompage du papillon des gaz (43) a une valeur prédéterminée ou moins.

FIG. 1

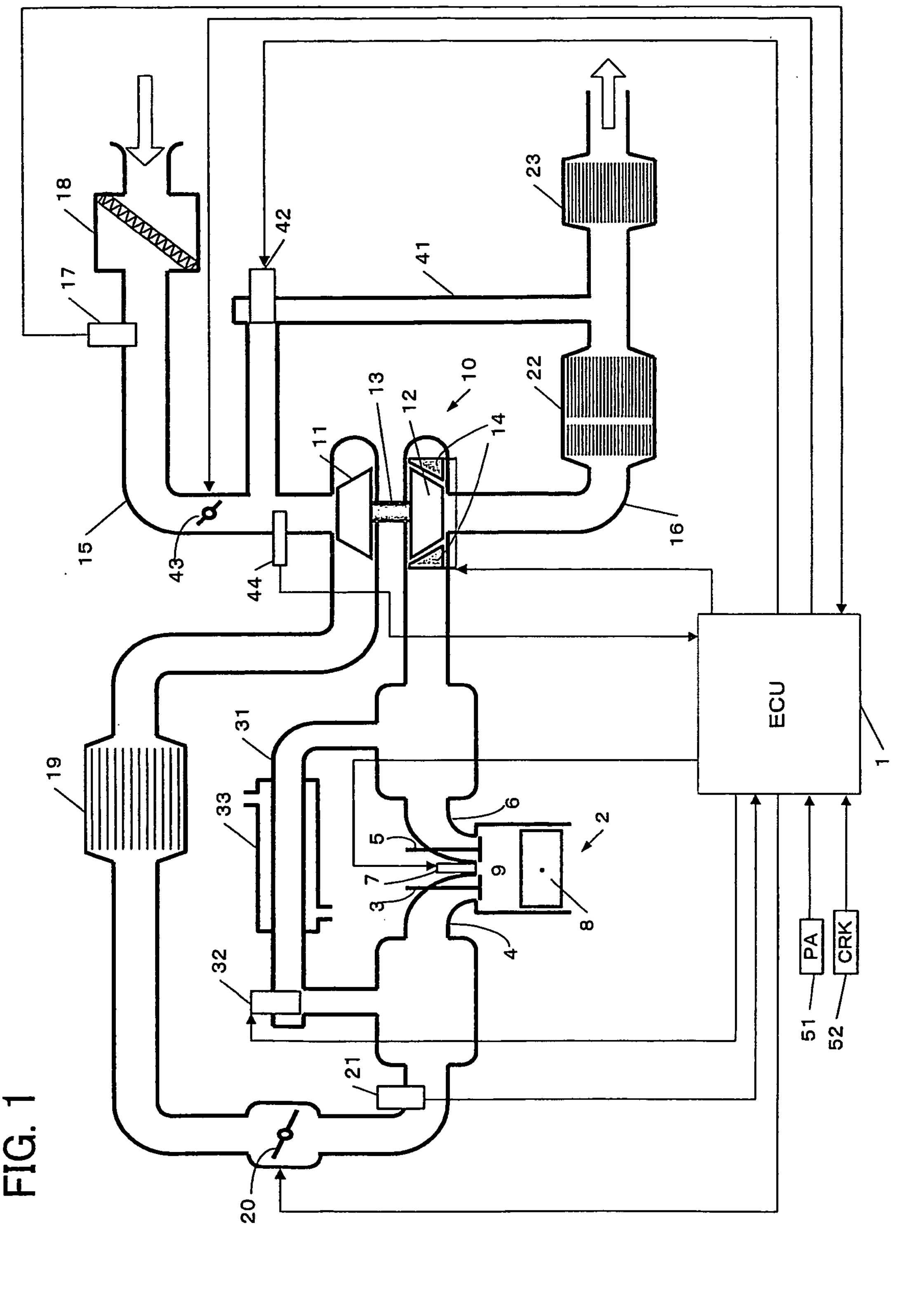
ECU
PA
CRK
1
2
3
4
5
6
7
8
9
10
11
12
13
14
15
16
17
18
19
20
21
22
23
31
32
33
41
42
43
44
51
52

FIG. 2

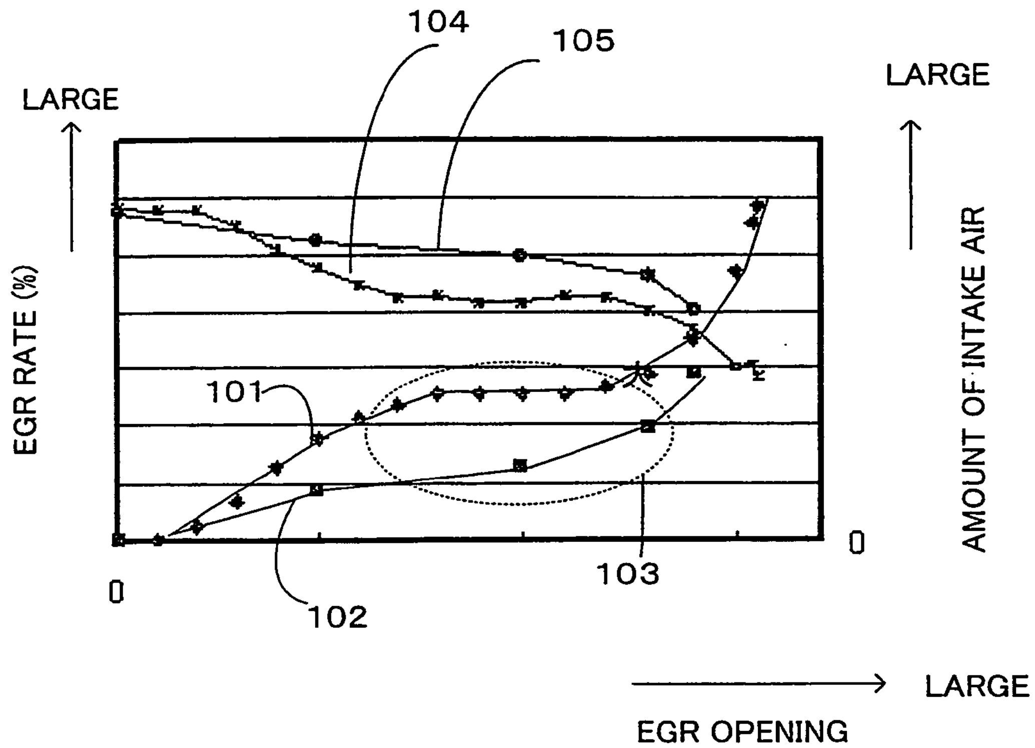
104
105
LARGE
LARGE
EGR RATE (%)
AMOUNT OF INTAKE AIR
101
0
0
103
102
LARGE
EGR OPENING

FIG. 3

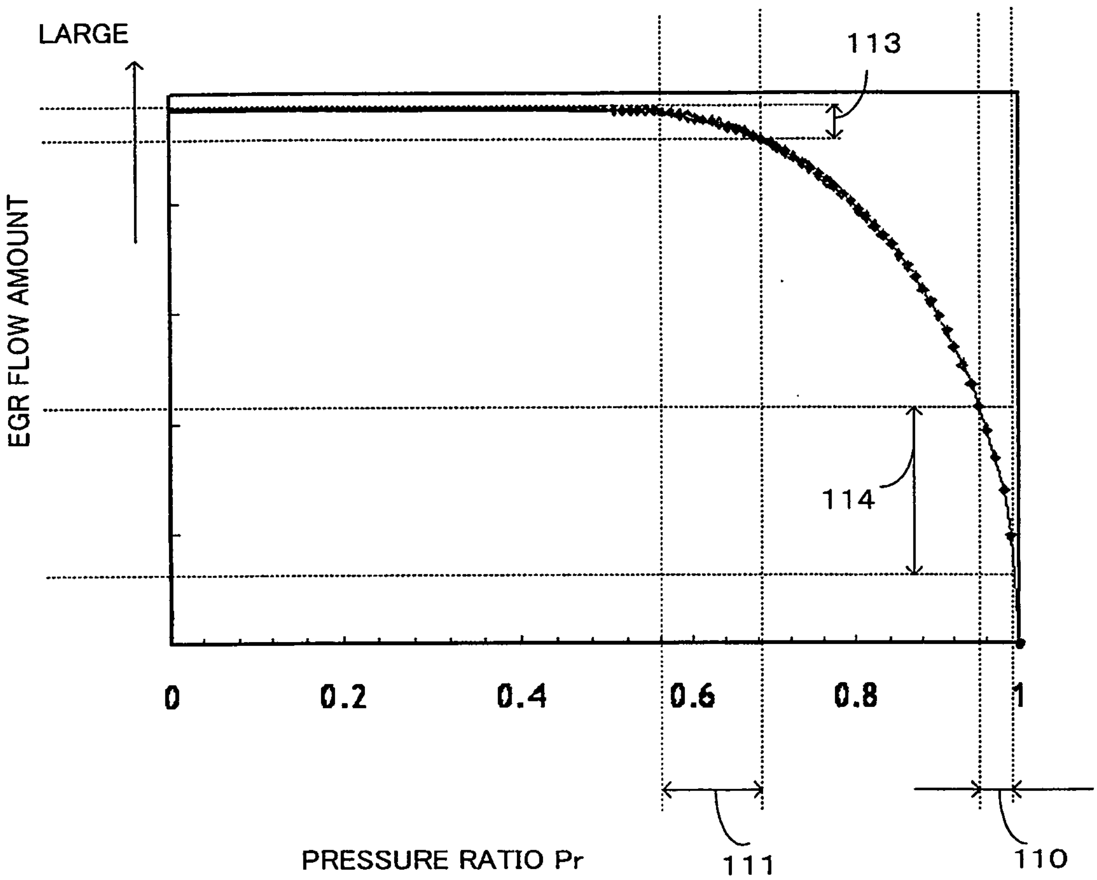
LARGE
EGR FLOW AMOUNT
113
114
0
0.2
0.4
0.6
0.8
1
PRESSURE RATIO Pr
111
110

FIG. 4

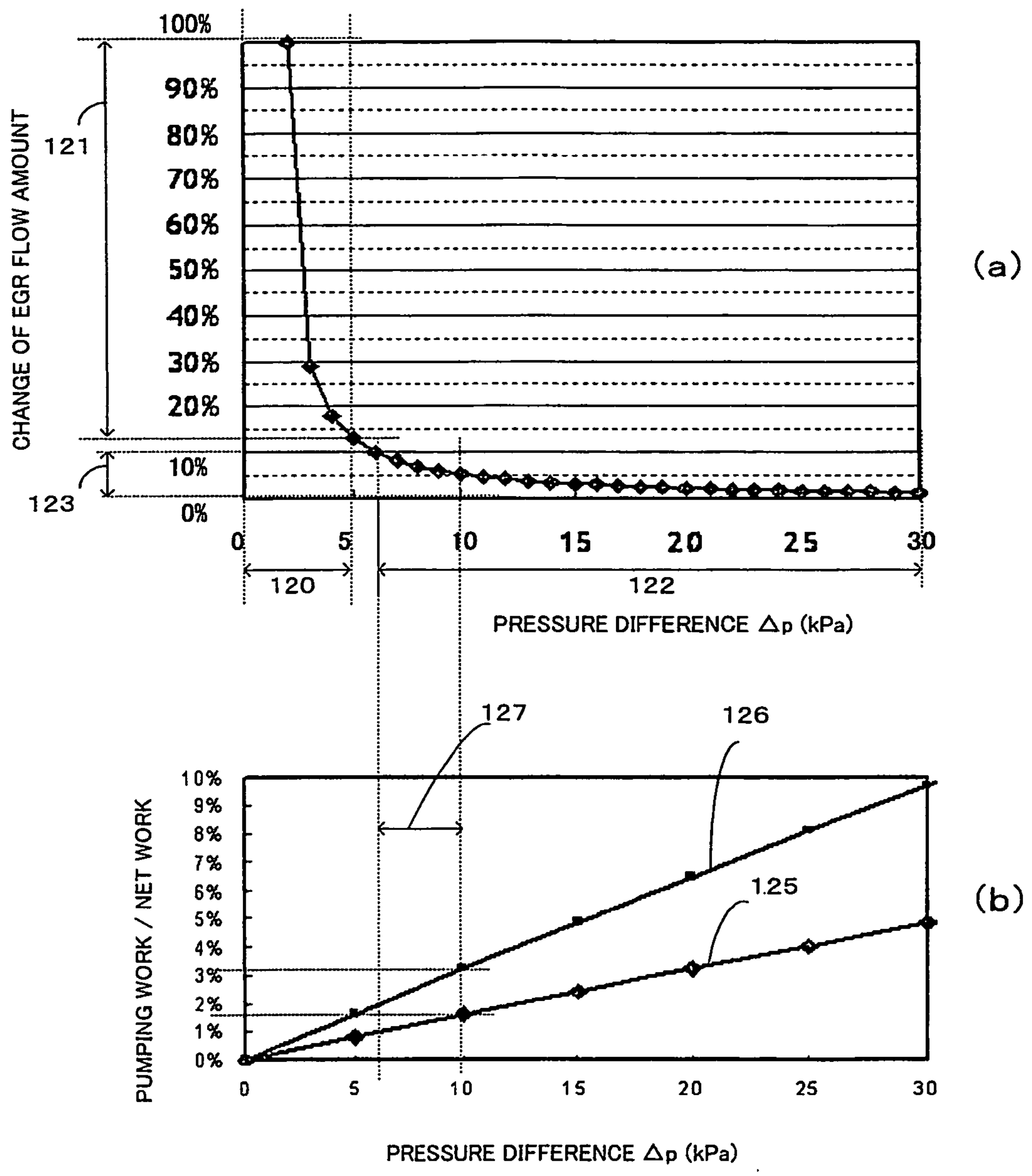
(a)
CHANGE OF EGR FLOW AMOUNT
100%
90%
80%
70%
60%
50%
40%
30%
20%
10%
0%
121
123
0
5
10
15
20
25
30
120
122
PRESSURE DIFFERENCE Δp (kPa)
(b)
127
126
1.25
PUMPING WORK / NET WORK
10%
9%
8%
7%
6%
5%
4%
3%
2%
1%
0%
0
5
10
15
20
25
30
PRESSURE DIFFERENCE Δp (kPa)

FIG. 5

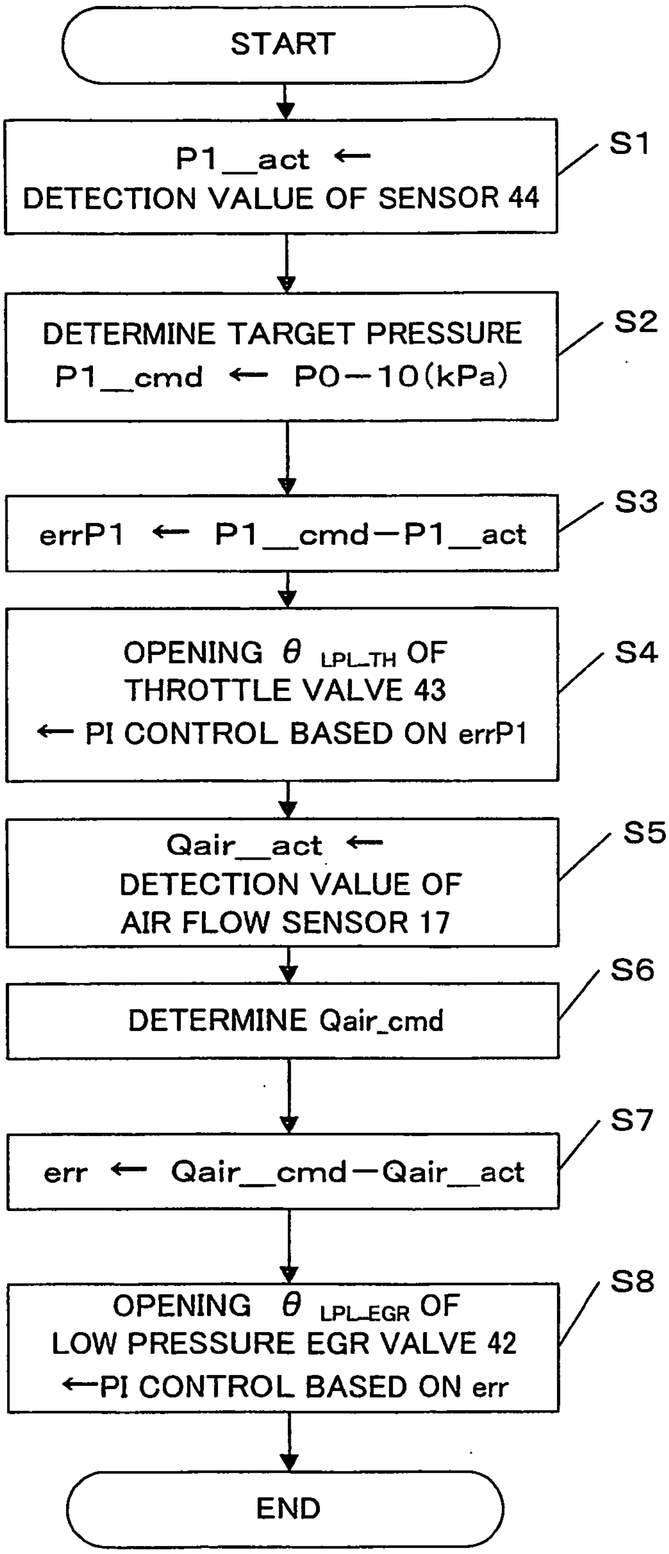
START
P1__act ←
DETECTION VALUE OF SENSOR 44
S1
DETERMINE TARGET PRESSURE
P1__cmd ← P0−10(kPa)
S2
errP1 ← P1__cmd−P1__act
S3
OPENING θ LPL_TH OF
THROTTLE VALVE 43
← PI CONTROL BASED ON errP1
S4
Qair__act ←
DETECTION VALUE OF
AIR FLOW SENSOR 17
S5
DETERMINE Qair_cmd
S6
err ← Qair__cmd−Qair__act
S7
OPENING θ LPL_EGR OF
LOW PRESSURE EGR VALVE 42
←PI CONTROL BASED ON err
S8
END

FIG. 6

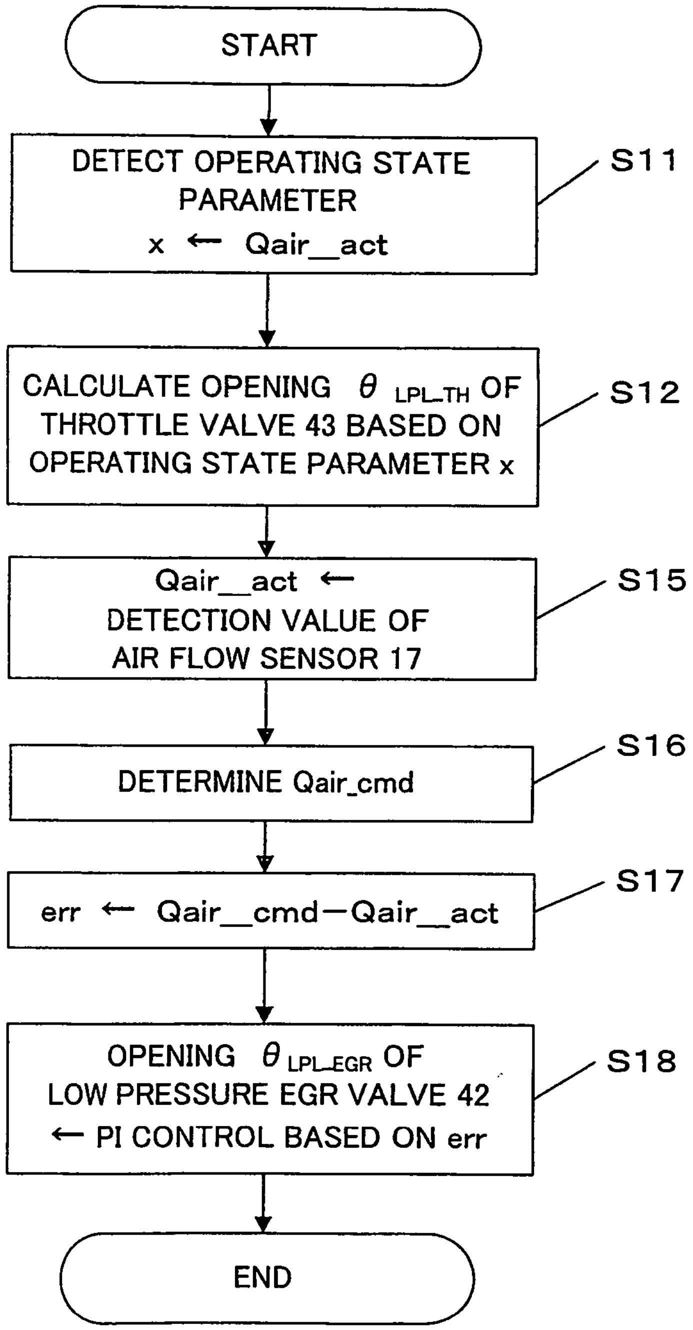
START
DETECT OPERATING STATE PARAMETER
x ← Qair__act
S11
CALCULATE OPENING θ LPL_TH OF THROTTLE VALVE 43 BASED ON OPERATING STATE PARAMETER x
S12
Qair__act ← DETECTION VALUE OF AIR FLOW SENSOR 17
S15
DETERMINE Qair_cmd
S16
err ← Qair__cmd−Qair__act
S17
OPENING θ LPL_EGR OF LOW PRESSURE EGR VALVE 42 ← PI CONTROL BASED ON err
S18
END

FIG.7

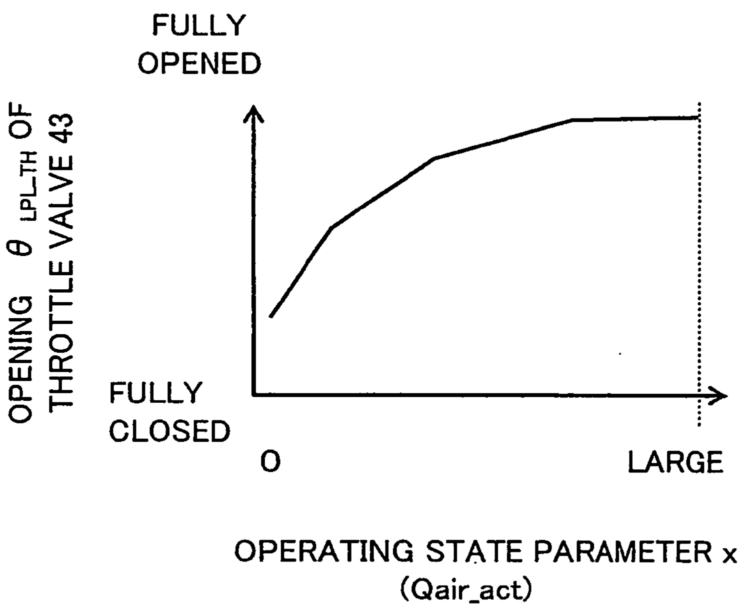
FULLY
OPENED
OPENING θ LPL_TH OF
THROTTLE VALVE 43
FULLY
CLOSED
O
LARGE
OPERATING STATE PARAMETER x
(Qair_act)

FIG. 8

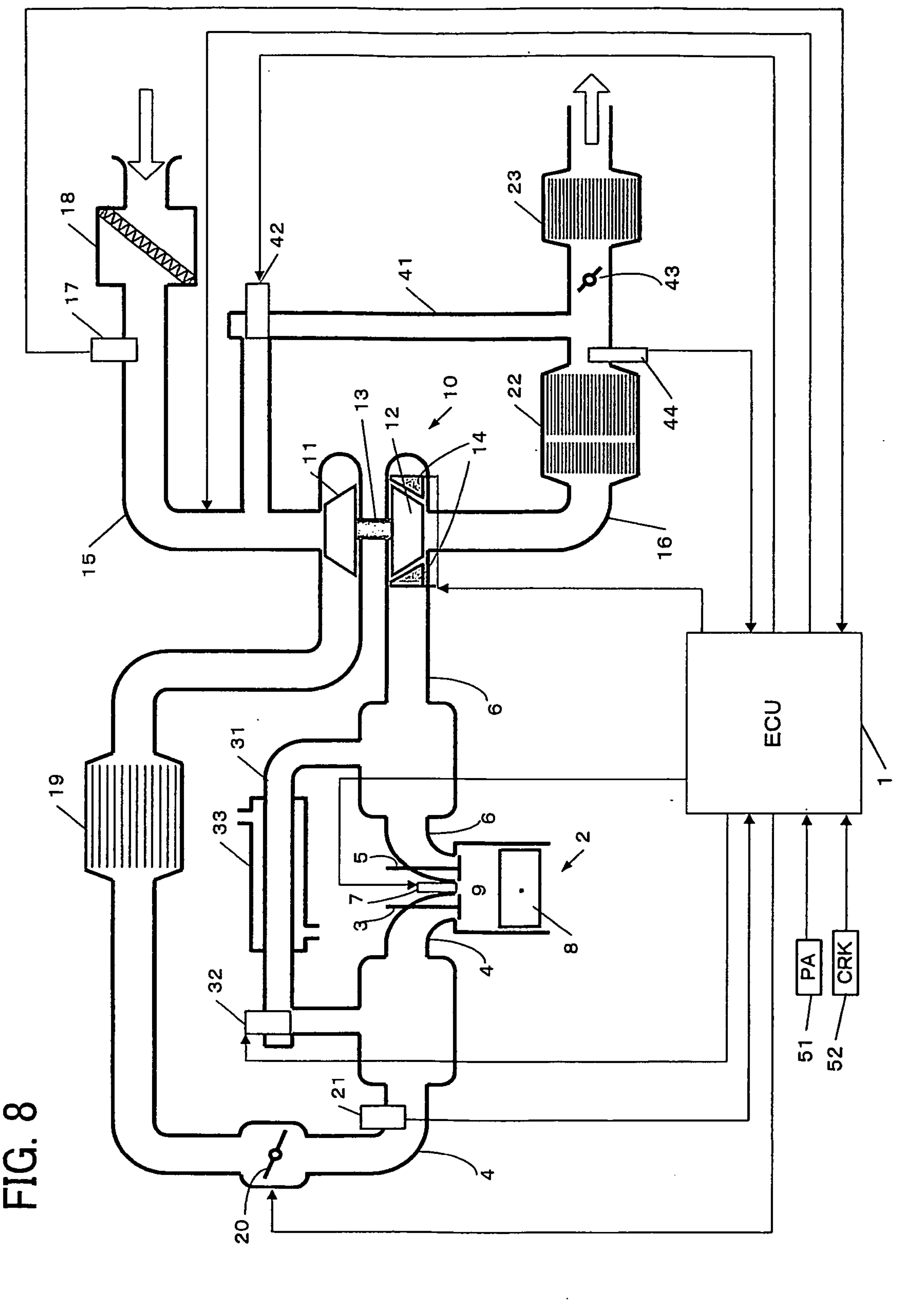
ECU
PA
CRK
1
2
3
4
5
6
7
8
9
10
11
12
13
14
15
16
17
18
19
20
21
22
23
31
32
33
41
42
43
44
51
52

FIG. 9

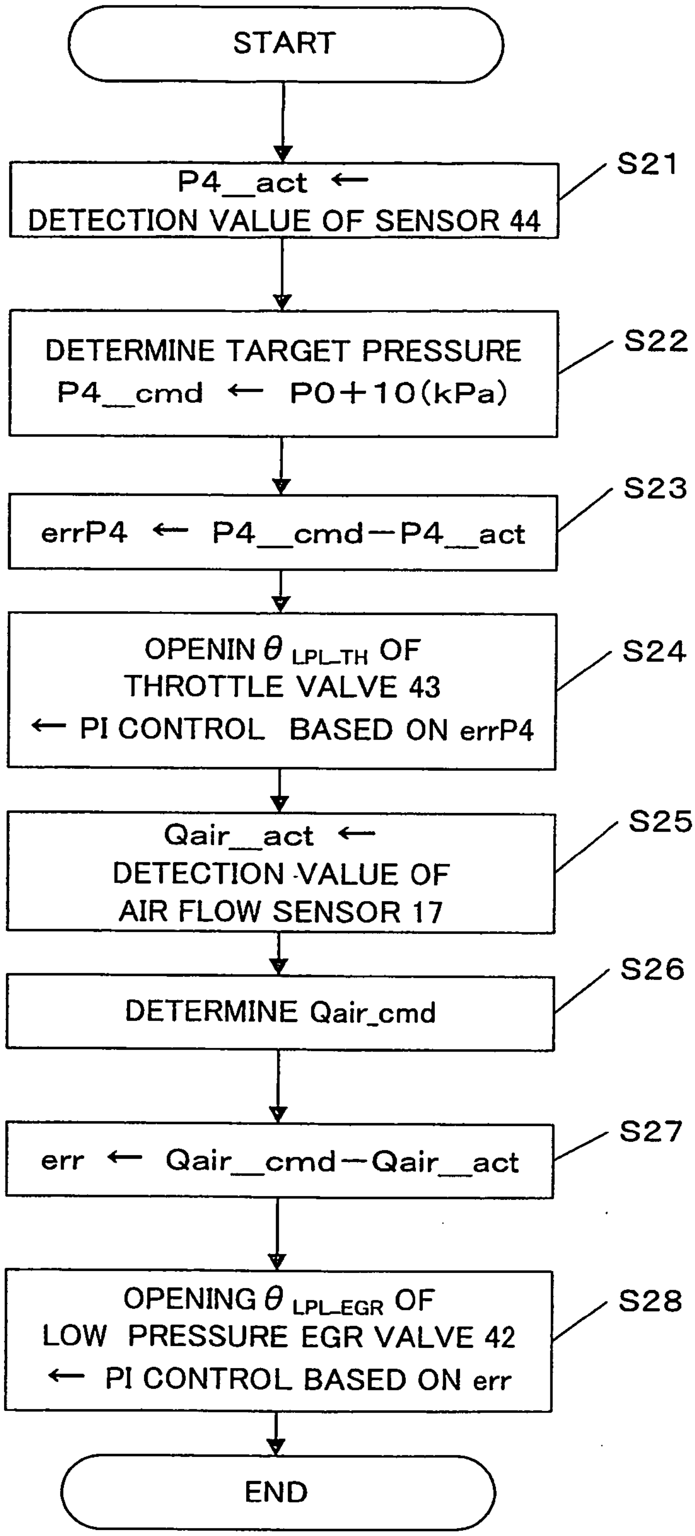
START
P4__act ←
DETECTION VALUE OF SENSOR 44
S21
DETERMINE TARGET PRESSURE
P4__cmd ← P0+10(kPa)
S22
errP4 ← P4__cmd−P4__act
S23
OPENIN θ LPL_TH OF
THROTTLE VALVE 43
← PI CONTROL BASED ON errP4
S24
Qair__act ←
DETECTION VALUE OF
AIR FLOW SENSOR 17
S25
DETERMINE Qair_cmd
S26
err ← Qair__cmd−Qair__act
S27
OPENING θ LPL_EGR OF
LOW PRESSURE EGR VALVE 42
← PI CONTROL BASED ON err
S28
END

FIG. 10

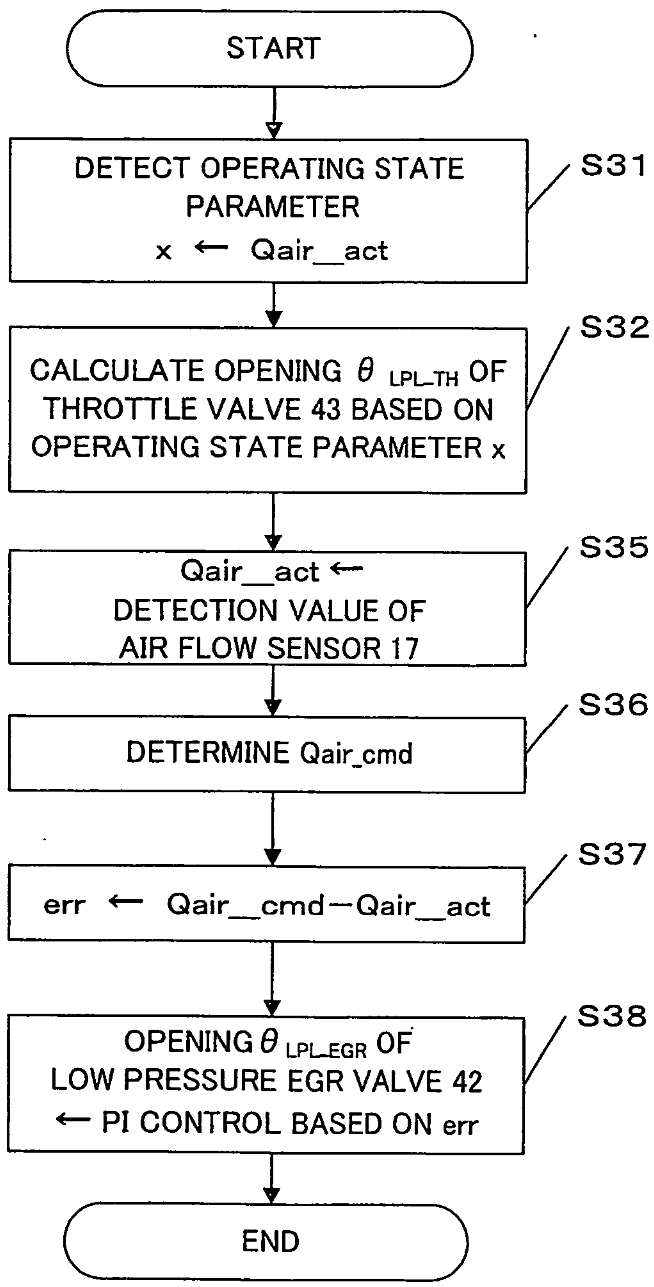
START
DETECT OPERATING STATE PARAMETER
x ← Qair_act
S31
CALCULATE OPENING θ LPL_TH OF THROTTLE VALVE 43 BASED ON OPERATING STATE PARAMETER x
S32
Qair_act ← DETECTION VALUE OF AIR FLOW SENSOR 17
S35
DETERMINE Qair_cmd
S36
err ← Qair_cmd−Qair_act
S37
OPENING θ LPL_EGR OF LOW PRESSURE EGR VALVE 42 ← PI CONTROL BASED ON err
S38
END

FIG. 11

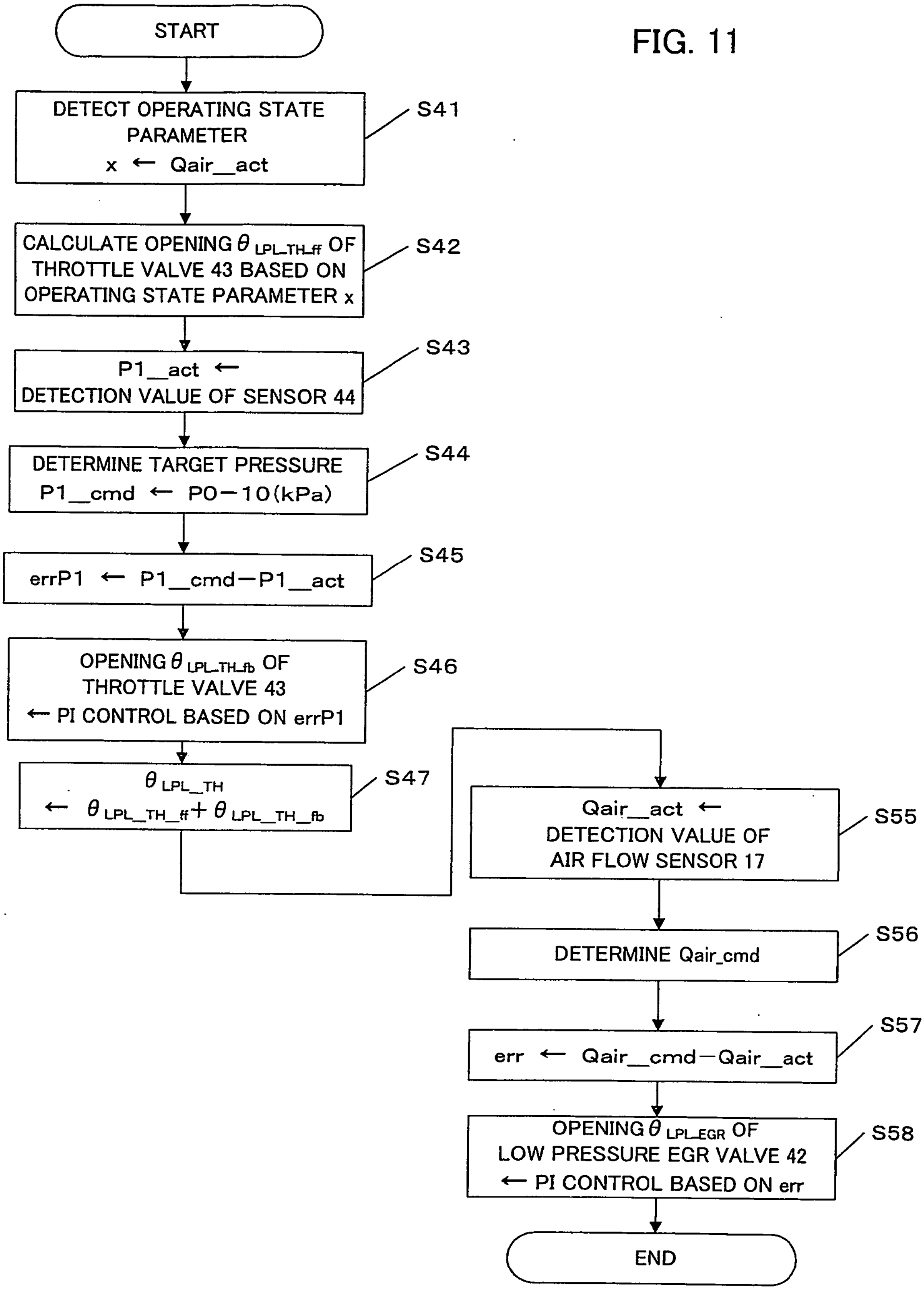
START
DETECT OPERATING STATE PARAMETER
x ← Qair_act
S41
CALCULATE OPENING θ LPL_TH_ff OF THROTTLE VALVE 43 BASED ON OPERATING STATE PARAMETER x
S42
P1_act ←
DETECTION VALUE OF SENSOR 44
S43
DETERMINE TARGET PRESSURE
P1_cmd ← P0−10(kPa)
S44
errP1 ← P1_cmd−P1_act
S45
OPENING θ LPL_TH_fb OF THROTTLE VALVE 43
← PI CONTROL BASED ON errP1
S46
θ LPL_TH
← θ LPL_TH_ff + θ LPL_TH_fb
S47
Qair_act ←
DETECTION VALUE OF AIR FLOW SENSOR 17
S55
DETERMINE Qair_cmd
S56
err ← Qair_cmd−Qair_act
S57
OPENING θ LPL_EGR OF LOW PRESSURE EGR VALVE 42
← PI CONTROL BASED ON err
S58
END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005127247 A
- JP 2004150319 A
- JP 2002021625 A
- DE 102006038863 A1